# EUROPEAN PATENT SPECIFICATION

(11) **EP 0 596 317 B1**
(45) Date of publication and mention of the grant of the patent: **29.01.1997**
(21) Application number: 93116872.8
(22) Date of filing: 19.10.1993
(51) Int. Cl.: A01N 53/06, A01N 25/18

(54) **Insecticidal composition**
Insektizide Zusammensetzung
Composition insecticide

(30) Priority: 05.11.1992 JP 295691/92; 06.07.1993 JP 166679/93
(43) Date of publication of application: 11.05.1994
(73) Proprietor: SUMITOMO CHEMICAL COMPANY LIMITED, Osaka-shi, Osaka 541 (JP)
(72) Inventor: Tanaka, Yasuyori, Toyonaka-shi (JP); Matsunaga, Tadahiro, Kobe-shi (JP)
(74) Representative: VOSSIUS & PARTNER

(56) References cited:
- EP-A- 0 148 625
- EP-A- 0 256 855
- DE-A- 2 738 878
- US-A- 4 889 872
- CHEMICAL PATENTS INDEX, DOCUMENTATION ABSTRACTS JOURNAL Week 9313, 2 June 1993 Derwent Publications Ltd., London, GB; AN 93-104155/13 & JP-A-5 043 412 (EARTH SEIYAKU K.K.) 23 February 1993
- CHEMICAL PATENTS INDEX, DOCUMENTATION ABSTRACTS JOURNAL Week 8841, 7 December 1988 Derwent Publications Ltd., London, GB; AN 88-289026/41 & JP-A-63 211 202 (FUMAKILA K.K.)

## Description

The present invention relates to a novel insecticidal composition, in particular, an insecticidal composition suitable for heating fumigation.

The specification of U.S. Patent No. 4,889,872 describes 2,3,5,6-tetrafluorobenzyl (+)-1R, trans-2,2-dimethyl-3-(2,2-dichlorovinyl)cyclopropanecarboxylate (referred to hereinafter as "benfluthrin") as having insecticidal activity.

JP-A-5043412 discloses insecticidal compositions comrising benfluthrin as active incredient either alone or in combination with other optional agents and well-known additives. An insecticidal composition for heating fumigation comprising a mixture of benfluthrin and N-(2-ethyl-hexyl)bicyclo[2.2.1]hept-5-ene-2,3-dicarboximide supported on a fibrous carrier is not specifically disclosed and it is not suggested that such a composition may show any surprising effect.

EP-A-0 256 855 discloses an insecticidal composition for an electric fumigator used for destroying insects such as mosquitos, houseflies etc. The insecticidal preparation comprises 2-methyl-4-oxo-3-(2-propynyl)cyclopent-2-enyl-chrysanthemate as an insecticide and a synergist such as N-(2-ethylhexyl)bicyclo[2.2.1]hept-5-ene-2,3-dicarboximide.

DE-A-27 38 878 discloses a process for fumigation of an insecticide by electrically heating materials which are impregnated with the insecticide.

However, when benfluthrin is used in the form of an insecticidal composition for heating fumigation, it has been difficult to obtain a stable insecticidal effect for a long period of time.

One object of the present invention is to provide a novel insecticidal composition.

Another object of the present invention is to provide an insecticidal composition which exhibits a stable insecticidal effect for a long period of time as an insecticidal composition for heating fumigation.

A further object is to provide a method for controlling pest insects by heating fumigation of the above insecticidal ccmposition.

These objects could be achieved on the basis of the finding that an insecticidal composition comprising benfluthrin and N-(2-ethylhexyl)bicyclo[2.2.1]hept-5-ene-2,3-dicarboximide (referred to hereinafter as "MGK 264") (said composition being referred to hereinafter as "present composition") exhibits a stable effect for a long period of time when applied for heating fumigation.

According to the present invention, there is provided an insecticidal composition for heating fumigation comprising benfluthrin, MGK 264 and a fibrous carrier, being benfluthrin and MGK 264 supported on the fibrous carrier.

Usually, the mixing ratio of benfluthrin to MGK 264 is approximately 1:2 to 1:50 by weight, preferably approximately 1:3 to 1:20 by weight.

The present composition is used in the form of a composition suitable for heating fumigation. Such a composition suitable for heating fumigation can be obtained by supporting, on a fibrous carrier, either a combination of benfluthrin and MGK 264, or a mixture of benfluthrin, MGK 264 and, optionally, a diluent, synergist, stabilizer, dyestuff, perfume and other insecticidally active ingredients, e.g. by impregnation. As the fibrous carrier used, there can be exemplified fibrous carriers consisting of one of or a combination of cellulose (e.g. paper and pulp), vegetable fiber (e.g. cotton), animal fiber (e.g. wool), glass fiber and synthetic fiber. For example, a fibrous carrier with a thickness of 1 to 4 mm, preferably 1.5 to 3 mm is used by supporting thereon benfluthrin and MGK 264 in total amounts of 0.6 - 4.0 mg/cm² and 5 - 30 mg/cm², respectively, e.g. by impregnation. It is preferable to add a solvent such as paraffin to MGK 264 on impregnation because of high viscosity of MGK 264. The amount of the solvent is usually 5 to 20 mg/cm².

The present composition obtained in the manner described above is suitable for heating fumigation. For example, it is suitable for application by vaporization of the insecticidal ingredient by means of an electric fumigator capable of heating said composition to 120 - 170°C.

The present composition is effective against the various pest insects controllable by the use of benfluthrin which are described in the specification of U.S. Patent No. 4,889,872. It is effective particularly in controlling pest insects such as flies and mosquitoes by heating fumigation.

The present invention is concretely illustrated with the following formulation examples, referential examples and test examples, which should not be construed as limiting the scope of the invention.

### Formulation Example 1

With 10 mg of benfluthrin was mixed 60 mg of MGK 264, and 130 mg of IP Solvent 2028 (composed mainly of isoparaffin, mfd. by Idemitsu Petrochemical Co.) was added to the resulting mixture to obtain a solution. A 22 mm x 35 mm x 2.8 mm fibrous plate (800 mg) composed of pulp and cotton was impregnated with said solution to obtain present composition (1).

### Formulation Example 2

With 10 mg of benfluthrin was mixed 140 mg of MGK 264, and 50 mg of IP Solvent 2028 (composed mainly of isoparaffin, mfd. by Idemitsu Petrochemical Co.) was added to the resulting mixture to obtain a solution. A 22 mm x 35 mm x 2.8 mm fibrous plate (800 mg) composed of pulp and cotton was impregnated with said solution to obtain present composition (2).

### Referential Example 1

To 10 mg of benfluthrin was added 190 mg of IP Solvent 2028 to obtain a solution. A 22 mm x 35 mm x 2.8 mm fibrous plate (800 mg) composed of pulp and cotton was impregnated with said solution to obtain reference composition (1).

### Referential Example 2

Reference composition (2) was obtained in exactly the same manner as in Formulation Example 1, except that 60 mg of bis(2,3,3,3-tetrachloropropyl) ether was used in place of 60 mg of MGK 264.

### Referential Example 3

Reference composition (3) was obtained in exactly the same manner as in Formulation Example 1, except that 60 mg of piperonyl butoxide was used in place of 60 mg of MGK 264.

### Test Example 1

Each composition to be tested was set on an electric fumigator capable of heating the composition to 160 - 170°C, and the electric fumigator was covered with a glass funnel. On end of a column for sampling which had been packed with 5.0 g of silica gel and closed with absorbent wadding plugs in the upper and lower parts was connected to the funnel, and the other end of the column was connected to a suction pump. Simultaneously with the start of electric current supply to the electric fumigator, suction was initiated so as to adjust the air suction rate to 2.0 liters/min, by use of the suction pump.

At definite times after the start of the electric current supply to the electric fumigator, vapor adsorbed on the silica gel and vapor adhering to the inner walls of the column and the funnel were eluted with acetone and then washed with acetone, whereby benfluthrin as active ingredient was collected. The amount of benfluthrin vaporized was measured by a gas chromatography.

Table 1 shows the vaporization rates of benfluthrin from 0 to 4 hours and from 4 to 8 hours after the start of the electric current supply, and the amount of benfluthrin remaining in each insecticidal composition 8 hours after the start of electric current supply.

**Table 1**

| | | Time elapsed, after supplying electric current and vaporization rate (mg/hr) | | Residual amount in a composition (mg) |
|---|---|---|---|---|
| | | 0-4 hrs | 4-8 hrs | |
| Present inventive composition | (1) | 1.2 | 0.8 | 1.1 |
| | (2) | 0.9 | 0.7 | 1.8 |
| Reference composition | (1) | 2.3 | 0 | 0 |
| | (2) | 2.0 | 0.3 | 0 |
| | (3) | 1.7 | 0.4 | 0.9 |

It can be speculated that the present compositions containing MGK 264 which is a known synergist act effectively for a relatively long period of time because the vaporization rate of benfluthrin is reduced as shown in Table 1. On the other hand, reference compositions (1), and (2) and (3) which contain bis(2,3,3,3-tetrachloropropyl) ether [S-421] and piperonyl butoxide [PBO], respectively in which [S-421] and [PBO] are known synergists are hardly able to maintain a constant insecticidal effect for a long period of time because a large portion of benfluthrin as active ingredient is vaporized in the early stages.

## Claims

1. An insecticidal composition for heating fumigation comprising 2,3,5,6-tetrafluorobenzyl (+)-1R, trans-2,2-dimethyl-3-(2,2-dichlorovinyl)cyclopropanecarboxylate and N-(2-ethylhexyl)bicyclo[2.2.1]hept-5-ene-2,3-dicarboximide supported on a fibrous carrier.

2. The insecticidal composition according to Claim 1, wherein the mixing ratio of 2,3,5,6-tetrafluorobenzyl (+)-1R, trans-2,2-dimethyl-3-(2,2-dichlorovinyl)cyclopropanecarboxylate to N-(2-ethylhexyl)bicyclo[2.2.1]hept-5-ene-2,3-dicarboximide is 1:2 to 1:50 by weight.

3. The insecticidal composition for heating fumigation according to Claim 1 or 2, wherein the thickness of said fibrous carrier is 1 to 4 mm, 2,3,5,6-tetrafluorobenzyl (+)-1R, trans-2,2-dimethyl-3-(2,2-dichlorovinyl)cyclopropanecarboxylate is supported on said fibrous carrier in an amount of 0.6 to 4.0 mg per cm² of said fibrous carrier, and N-(2-ethylhexyl)bicyclo[2.2.1]hept-5-ene-2,3-dicarboximide is supported on said fibrous carrier in an amount of 5 to 30 mg per cm² of said fibrous carrier.

4. A method for controlling pest insects by heating fumigation using the insecticidal composition of any of Claims 1 to 3.

## Patentansprüche

1. Insektizide Zusammensetzung zum Ausräuchern mittels Erhitzen, umfassend 2,3,5,6-Tetrafluorbenzyl (+)-1R, trans-2,2-dimethyl-3-(2,2-dichlorvinyl)cyclopropan carboxylat und N-(2-Ethylhexyl)bicyclo[2.2.1]hept-5-en-2,3-dicarboximid auf einem fasrigen Träger.

2. Insektizide Zusammensetzung nach Anspruch 1, wobei das gewichtsmäßige Mischungsverhältnis von 2,3,5,6-Tetrafluorbenzyl (+)-1R, trans-2,2-dimethyl-3-(2,2-dichlorvinyl)cyclopropan carboxylat zu N-(2-Ethylhexyl)bicyclo[2.2.1]hept-5-en-2,3-dicarboximid 1 : 2 bis 1 : 50 beträgt.

3. Insektizide Zusammensetzung zum Ausräuchern mittels Erhitzen nach Anspruch 1 oder 2, wobei die Stärke des fasrigen Trägers 1 bis 4 mm beträgt, und 2,3,5,6-Tetrafluorbenzyl (+)-1R, trans-2,2-dimethyl-3-(2,2-dichlorvinyl)cyclopropan carboxylat in einer Menge von 0,6 bis 4,0 mg je cm² und N-(2-Ethylhexyl)bicyclo[2.2.1]hept-5-en-2,3-dicarboximid in einer Menge von 5 bis 30 mg je cm² auf dem fasrigen Träger vorhanden sind.

4. Verfahren zur Bekämpfung von Schadinsekten mittels Ausräuchern durch Erhitzen unter Verwendung der insektiziden Zusammensetzung aus einem der Ansprüche 1 bis 3.

## Revendications

1. Composition insecticide pour fumigation par chauffage comprenant du carboxylate de 2,3,5,6 - tétrafluorobenzyl (+) - 1 R, trans - 2,2 - diméthyl - 3 - (2,2 - dichlorovinyl) cyclopropane et du N - (2 - éthylhexyl) bicyclo [2.2.1] hept - 5 - èn - 2,3 - dicarboximide portés par un support fibreux.

2. Composition insecticide selon la revendication 1, dans laquelle le rapport de mélange du carboxylate de 2,3,5,6 - tétrafluorobenzyl (+) - 1 R, trans - 2,2 - diméthyl - 3 - (2,2 - dichlorovinyl) cyclopropane au N - (2 - éthylhexyl) bicyclo [2.2.1] hept - 5 - èn - 2,3 - dicarboximide est de 1:2 à 1:50 en poids.

3. Composition insecticide pour fumigation par chauffage selon la revendication 1 ou 2, dans laquelle l'épaisseur dudit support fibreux est de 1 à 4 mm, le carboxylate de 2,3,5,6 - tétrafluorobenzyl (+) - 1 R, trans - 2,2 - diméthyl - 3 - (2,2 - dichlorovinyl) cyclopropane est porté par ledit support fibreux en une quantité de 0,6 à 4,0 mg par cm² dudit support fibreux, et le N - (2 - éthylhexyl) bicyclo [2.2.1] hept - 5 - èn - 2,3 - dicarboximide est porté par ledit support fibreux en une quantité de 5 à 30 mg par cm² dudit support fibreux.

4. Procédé de contrôle des insectes nuisibles par fumigation par chauffage utilisant la composition insecticide selon l'une quelconque des revendications 1 à 3.
